# EUROPEAN PATENT APPLICATION

(11) **EP 4 806 713 A1**
(43) Date of publication of application: **16.09.2026**
(21) Application number: 25162790.7
(22) Date of filing: 11.03.2025
(51) Int. Cl.: B60L 15/20, H02P 29/62

(54) **A COMPUTER SYSTEM AND METHOD FOR A VEHICLE**

(71) Applicant: Volvo Truck Corporation, 405 08 Göteborg (SE)
(72) Inventor: GILLSTRÖM, Andreas, VÄSTRA FRÖLUNDA (SE); HALL, Sebastian, GÖTEBORG (SE)
(74) Representative: Ström & Gulliksson AB

(57) **Abstract**

A computer system comprising processing circuitry is provided. The processing circuitry is configured to obtain a required drive torque (T_{ref}) for a vehicle (**1**), and obtain a heat requirement (H_{ref}) for a component (**12, 14, 20, 40**) of the vehicle (**1**). The processing circuitry is further configured to cause, in response to the required drive torque (T_{ref}) being less than the maximum torque capability of at least one electrical machine (**10a-b**): control of at least one first electrical machine (**10a-b**), connected to a drivetrain of the vehicle (**1**) and forming part of a vehicle drive system (**11**), to generate the required drive torque (T_{ref}); and control of at least one second electrical machine (**10a-b**) forming part of the vehicle drive system (**11**), to generate excess heat. The processing circuitry is further configured to distribute the excess heat to the component (**12, 14, 20, 40**) of the vehicle (**1**) such that the heat requirement (H_{ref}) is fulfilled.

## Description

### TECHNICAL FIELD

The disclosure relates generally to vehicles. In particular aspects, the disclosure relates to computer systems and methods for vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles may be equipped with drive systems having electrical machines connected to the drivetrain in order to produce and deliver the required propulsion force for the vehicle. One particular system that has gained popularity is a single drive system having two or more electrical machines connected to a common gearbox. Especially for heavy duty vehicles, this concept has proven very useful to produce the high requirements on drive torque and overall functionality and performance.

At the same time, there is a strive to minimize the amount of components and its associated costs. It would therefore be beneficial if the drive system could be controlled also to replace, at least to some extent, other components of the vehicle while still performing its main task of producing the requested drive torque.

### SUMMARY

According to a first aspect of the disclosure, a computer system comprising processing circuitry is provided. The processing circuitry is configured to obtain a required drive torque for a vehicle, and to obtain a heat requirement for a component of the vehicle. The processing circuitry is further configured to cause, in response to the required drive torque being less than the maximum torque capability of a vehicle drive system: control of at least one first electrical machine, connected to a drivetrain of the vehicle and forming part of a vehicle drive system, to generate the required drive torque; and control of at least one second electrical machine forming part of the vehicle drive system, to generate excess heat. The processing circuitry is further configured to distribute the excess heat to the component of the vehicle such that the heat requirement is fulfilled. The first aspect of the disclosure may seek to increase the utilization of the vehicle drive system such that control of the vehicle drive system may at least to some extent reduce the need for separate heaters of the vehicle. A technical benefit may include a more versatile and cost effective utilization of existing vehicle drive systems.

Optionally in some examples, including in at least one preferred example, the processing circuitry is further configured to cause, in response to the associated vehicle being parked and the required drive torque being zero: control of at least one electrical machine, connected to a drivetrain of the vehicle, to generate excess heat; and control of all electrical machines of the vehicle drive system to generate zero drive torque. A technical benefit may include that the drive system may provide excess heat even when the vehicle is parked and when there is no request for positive or negative drive torque.

Optionally in some examples, including in at least one preferred example, the processing circuitry is further configured to cause control of at least one electrical machine, disconnected from the drivetrain of the vehicle and forming part of the vehicle drive system to generate excess heat. A technical benefit may include improved flexibility in heat generation by utilizing a disconnected electrical machine.

Optionally in some examples, including in at least one preferred example, the processing circuitry is further configured to cause control of at least one electrical machine, connected to the drivetrain of the vehicle and forming part of the vehicle drive system, to generate excess heat. A technical benefit may include improved utilization of the one or more electrical machines already controlled to generate drive torque.

Optionally in some examples, including in at least one preferred example, the processing circuitry is further configured to cause, in response to the required drive torque being higher than the maximum torque capability of at least one electrical machine: control of at least one electrical machine, connected to a drivetrain of the vehicle, at a non-ideal condition to generate excess heat while maintaining the torque output. A technical benefit may include a reliable heat generation without affecting the torque output negatively.

Optionally in some examples, including in at least one preferred example, the processing circuitry is further configured to: apply a first set of control parameters for the at least one connected electrical machine, and a second set of control parameters for the at least one disconnected electrical machine. A technical benefit may include simple yet reliable heat generation, requiring no specific hardware but instead using control parameters to cause the drive system to produce the required drive torque and the desired excess heat.

Optionally in some examples, including in at least one preferred example, the first set of control parameters is optimized with regards to generation of drive torque, and/or wherein the second set of control parameters is suboptimal with regards to generation of drive torque. A technical benefit may include accurate and effective generation of the requested drive torque as well as the desired excess heat.

Optionally in some examples, including in at least one preferred example, the second set of control parameters is optimized with regards to generation of excess heat. A technical benefit may include further accuracy and effectiveness of the generation of the desired excess heat.

Optionally in some examples, including in at least one preferred example, the processing circuitry is further configured to: determine that at least one electrical machine of the vehicle drive system is capable of providing the required drive torque; and disconnect the at least one remaining electrical machine of the vehicle drive system from the drivetrain of the vehicle. A technical benefit may include improved flexibility in utilizing the disconnected electrical machine(s) for generation of excess heat.

Optionally in some examples, including in at least one preferred example, the processing circuitry is further configured to control a cooling system of the electric drive system to distribute the excess heat to the component of the vehicle. A technical benefit may include a reliable and effective utilization of the generated excess heat, thereby allowing existing or otherwise required heaters to be at least to some extent omitted from the vehicle.

Optionally in some examples, including in at least one preferred example, the electrical machines are connected to a common gearbox, and wherein the processing circuitry is further configured to: apply a first set of control parameters for the at least one connected electrical machine, and a second set of control parameters for the at least one disconnected electrical machine; wherein the first set of control parameters is optimized with regards to generation of drive torque, wherein the second set of control parameters is suboptimal with regards to generation of drive torque and optimized with regards to generation of excess heat; wherein the processing circuitry is further configured to: determine that the required drive torque of the vehicle is less than a maximum available torque of the vehicle drive system; determine that at least one electrical machine of the vehicle drive system is capable of providing the required drive torque; and disconnect the at least one remaining electrical machine of the vehicle drive system from the drivetrain of the vehicle; and wherein the processing circuitry is further configured to: control a cooling system of the electric drive system to distribute the excess heat to the component of the vehicle. A technical benefit may include improved utilization and flexibility of the vehicle drive system, using at least one electrical machine to produce excess heat to be used to heat another component of the vehicle, while still keeping the vehicle drive system capable of providing the desired drive torque.

According to a second aspect of the disclosure, an electric drive system of a vehicle is provided. The electric drive system comprises at least to electrical machines and the computer system of the first aspect. The second aspect of the disclosure may seek to allow the generation of excess heat internally within an existing drive system, rather than requiring a separate heater. A technical benefit may include effective and reliable multifunction utilization of a drive system.

Optionally in some examples, including in at least one preferred example, the electrical drive system further comprises a gearbox connected to the at least two electrical machines, and wherein each electrical machine is connected to the gearbox via a disconnect coupling. A technical benefit may include allowing the drive system to operate in one of several operation modes depending on the requirements.

According to a third aspect, a vehicle is provided. The vehicle comprises the electrical drive system of the second aspect. The third aspect of the disclosure may seek to reduce the cost and complexity of the vehicle. A technical benefit may include allowing the electrical drive system to also produce excess heat thereby reducing the need for a separate heater.

According to a fourth aspect, a computer-implemented method is provided. The computer-implemented method comprises obtaining, by processing circuitry of a computer system, a required drive torque for a vehicle; obtaining, by the processing circuitry, a heat requirement for a component of the vehicle; causing, by the processing circuitry in response to the required drive torque being less than the maximum torque capability of a vehicle drive system: control, of at least one first electrical machine, connected to a drivetrain of the vehicle and forming part of a vehicle drive system, to generate the required drive torque; control of at least one second electrical machine forming part of the vehicle drive system, to generate excess heat; and distributing, by the processing circuitry, the excess heat to the component of the vehicle such that the heat requirement is fulfilled. The fourth aspect of the disclosure may seek to increase the utilization of the vehicle drive system such that control of the vehicle drive system may at least to some extent reduce the need for separate heaters of the vehicle. A technical benefit may include a more versatile and cost effective utilization of existing vehicle drive systems.

Optionally in some examples, including in at least one preferred example, the method further comprises applying a first set of control parameters for the at least one connected electrical machine, and a second set of control parameters for the at least one disconnected electrical machine, wherein the first set of control parameters is optimized with regards to generation of drive torque, and wherein the second set of control parameters is suboptimal with regards to generation of drive torque. A technical benefit may include simple yet reliable heat generation, requiring no specific hardware but instead using control parameters to cause the drive system to produce the required drive torque and the desired excess heat.

Optionally in some examples, including in at least one preferred example, the method further comprises determining that the required drive torque of the vehicle is less than a maximum available torque of the vehicle drive system; determining that at least one electrical machine of the vehicle drive system is capable of providing the required drive torque; and disconnecting the at least one remaining electrical machine of the vehicle drive system from the drivetrain of the vehicle. A technical benefit may include improved flexibility in utilizing the disconnected electrical machine(s) for generation of excess heat.

Optionally in some examples, including in at least one preferred example, the method further comprises controlling a cooling system of the electric drive system to distribute the excess heat to the component of the vehicle. A technical benefit may include a reliable and effective utilization of the generated excess heat, thereby allowing existing or otherwise required heaters to be at least to some extent omitted from the vehicle.

According to a fifth aspect of the disclosure, a computer program product is provided. The computer program product comprises program code for performing, when executed by the processing circuitry, the method of the fourth aspect.

According to a sixth aspect of the disclosure, a non-transitory computer-readable storage medium is provided. The non-transitory computer-readable storage medium comprises instructions, which when executed by the processing circuitry, cause the processing circuitry to perform the method of the fourth aspect.

The fifth and sixth aspects of the disclosure may seek to increase the utilization of the vehicle drive system such that control of the vehicle drive system may at least to some extent reduce the need for separate heaters of the vehicle. A technical benefit may include a more versatile and cost effective utilization of existing vehicle drive systems.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary side view of a vehicle according to an example.
**FIG. 2** is an exemplary hardware diagram of an electric drive system according to an example.
**FIG. 3** is an exemplary system diagram of a drive control system according to an example.
**FIG. 4** is an exemplary flow chart of a control scheme for an electrical drive system according to an example.
**FIG. 5** is an exemplary system diagram of a heat generation control system according to an example.
**FIG. 6** is another view of a heat generation control system according to an example.
**FIG. 7** is a flow chart of an exemplary method to operate an electrical drive system to generate excess heat according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure aims to provide increased utilization of an electric drive system for a vehicle, which drive system comprises two or more electrical machines being connected to a common gearbox. In particular, increased utilization is achieved by controlling at least one of the electrical machines to generate excess heat while the drive system is still controlled to deliver the requested drive torque even in cases when such requested drive torque is zero. The present disclosure further relates to a complete control method for such drive system to generate excess heat in a number of different drive situations ranging from when the vehicle is parked, to when all electrical machines of the drive system are required to produce the requested drive torque.

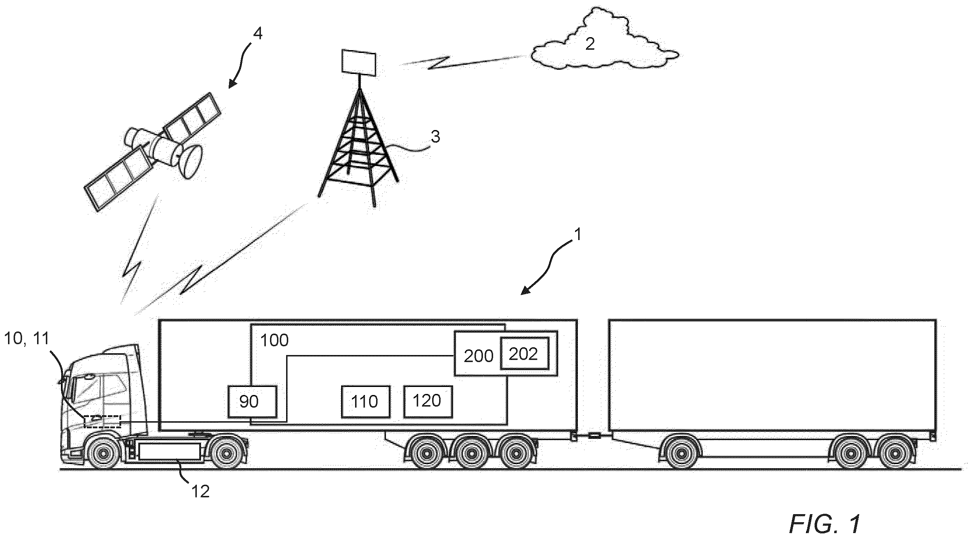

**FIG. 1** is an exemplary view of a vehicle **1** according to one example. The vehicle **1** comprises at least two electrical machines **10a-b** used to propel the vehicle **1.** The at least two electrical machines **10a-b** form part of an electric drive system **11** and may be powered by an energy storage system **12,** such as one or more batteries, configured to provide electrical energy to the two or more electrical machines **10a-b.** The energy storage system **12** may form part of the electric drive system **11,** or it may be a separate component being connected to the electric drive system **11.**

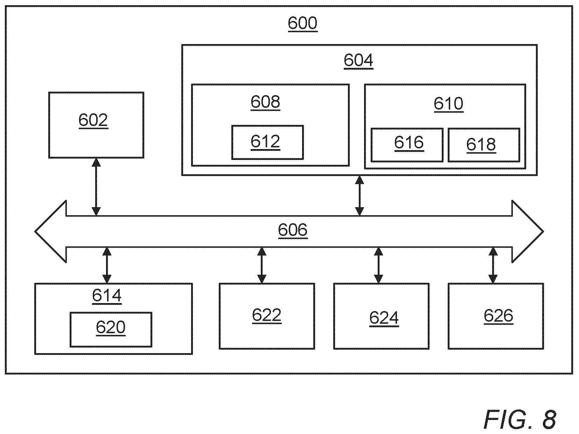

The vehicle **1** comprises, at least to some extent, processing circuitry **110** forming part of a computer system **100** (see **FIG. 8**). The processing circuitry **110** is configured to implement a drive control system **200** which is configured to be operatively connected to the electric drive system **11** in order to control the electric drive system **11** to provide the required drive torque, as well as to generate excess heat when desired.

The vehicle **1** may further comprise communications circuitry **90** configured to receive and/or send communications. The communications circuitry **90** may be configured to enable the vehicle **1** to communicate with one or more external devices or systems such as a cloud server **2.** The communication with the external devices or systems may be directly or via a communications interface such as a cellular communications interface **3,** such as a radio base station. The cloud server **2** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **4** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **1** may for example be configured to utilize data obtain from the GNSS **4** to determine a geographical location of the vehicle **1.**

The vehicle **1** in **FIG. 1** comprises the computer system **100** and the drive control system **200.** The computer system **100** may be operatively connected to the drive control system **200** and optionally to the communications circuitry **90** of the vehicle **1.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The drive control system **200** may comprise drive control system processing circuitry **202;** the drive control system processing circuitry **202** may be part of the processing circuitry **110** of the computer system **100.**

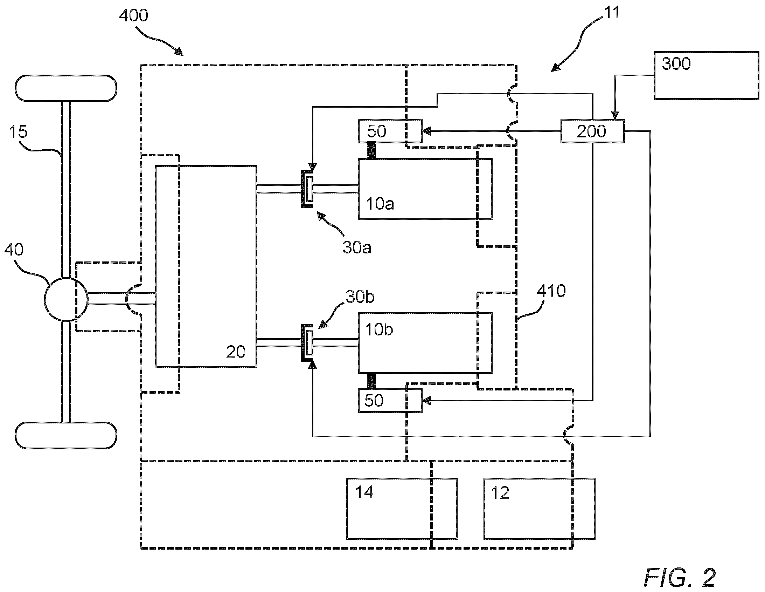

**FIG. 2** is a schematic hardware diagram of an electric drive system **11** according to an example. The electric drive system **11** comprises two electrical machines **10a-b,** although any suitable number of electrical machines could be considered, as long as the total number is at least two. The electrical machines **10a-b** are connected to a common gearbox **20** via a respective disconnect coupling **30a-b.** It should be noted that not all electrical machines **10a-b** need to have an associated disconnect coupling **30a-b,** however it is preferred that at least one electrical machine **10a-b** is allowed to be disconnected from the drivetrain.

Typically, the gearbox **20** outputs a drive torque to a differential **40** of a driven axle **15.** The driven axle **15** may be a front axle, a rear axle, or an intermediate axle of a vehicle **1.**

In the shown example, each electrical machine **10a-b** is connected to a drive control system **200.** The drive control system **200** may be a single drive control system **200** or separate drive control systems **200.** The drive control system **200** is configured to determine control parameters for the electrical machines **10a-b,** and to provide the required control signals to the electrical machines **10a-b** via suitable inverters **50.**

The drive control system **200** implements a heat generation algorithm. A heat generation control system **300** is provided for providing input data comprising at least a drive torque request T_{ref} and a heat request H_{ref} to the drive control system **200.** Based on the drive torque request T_{ref}, and the heat request H_{ref} the drive control system **200** is configured to control the operation of the disconnect couplings **30a-b,** as well as the inverters **50** such that the requested heat and the requested torque are provided by the electrical machines **10a-b.**

A cooling system **400** is further provided. The cooling system **400** is preferably a liquid cooling system, and here exemplified as a cooling circuit **410** passing the electrical machines **10a-b.** Further, although optional, the cooling circuit **410** passes several other components that may be in need for excess heat generated by the electrical machines **10a-b,** such as the gearbox **20,** the differential **40,** and one or more auxiliary components such as an energy storage system **12** and/or power electronics **14.** By identifying a need for excess heat in any component part of the cooling system **400,** the drive control system **200** may, by input from the heat generation control system **300,** control one or more of the electrical machines **10a-b** to produce excess heat, whereby the cooling system **400** transports the excess heat to the specific component in need.

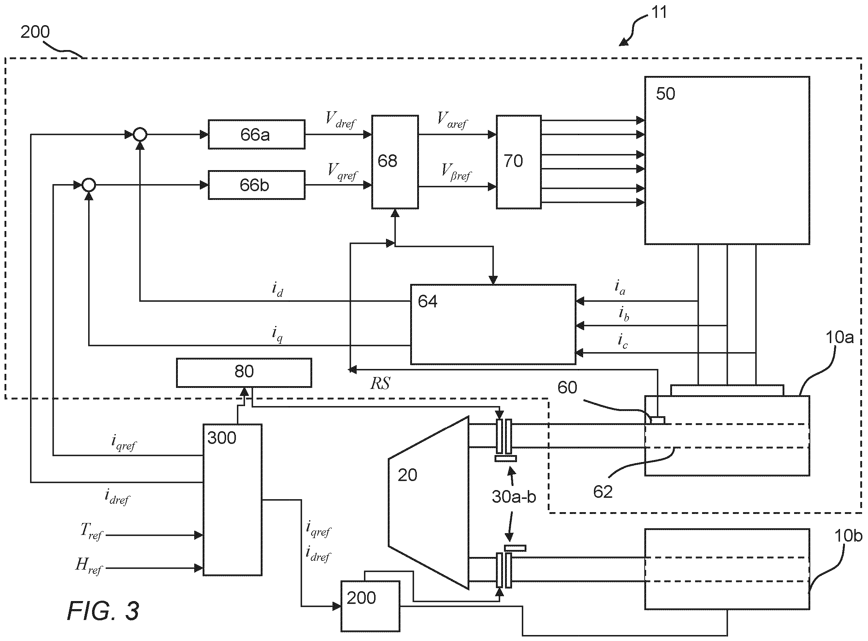

In **FIG. 3** further details of an electric drive system **11** and an associated drive control system **200** is shown. Although the drive control system **200** is only described for one electrical machine **10a** in detail, it should be understood that such drive control system **200** is equally applicable for the other electrical machine **10b.** The electrical machine **10a** may optionally be provided with a resolver **60** configured to transmit a resolver signal **RS** being indicative of the current position of a rotor **62** of the electrical machine **10.**

The drive control system **200** is programmed to allow field-oriented control (FOC) of the electrical machines **10a-b.** The drive control system **200** may, as an example, comprise a transformation circuitry **64** configured to measure and transform the motor phase currents **iₐ, i_{b}, i_{c}** to the dq frame, resulting in measured dq frame currents **i_{d}** and **i_{q}.** These transformed currents **i_{d}** and **i_{q}** are compared to reference currents **i_{dref}** and **i_{qref}** (i.e. the flux reference and the torque reference) by regulators **66a, 66b,** outputting reference voltages **V_{dref}** and **V_{qref}** in the dq frame. An inverse transformation circuitry **68** is configured to invert the reference voltages **V_{dref}** and **V_{qref}** to the voltage components **V_{αref}** and **V_{βref}** of the stator vector voltage in the stationary orthogonal reference frame. These reference voltages are inputs to a space vector pulse-width modulator **70** which is configured to provide drive signals to an inverter **50.**

As the electrical machines **10a-b** are disconnectable from the gearbox **20** by the disconnect couplings **30a-b,** the drive control system **200** may comprise an actuator **80** configured to control the disconnect coupling **30a-b** in a connected or disconnected state.

According to examples described herein, the drive control system **200** is configured to control the electrical machines **10a-b** based on the *d* current **i_{d}** and *q* current **i_{q}.** In particular, the drive control system **200** is configured to obtain, such as by receiving or by determining, a torque request T_{ref} and a heat request H_{ref}. The torque request T_{ref} and the heat request H_{ref}, provided by the heat generation control system **300,** are used as a basis for determining the reference currents **i_{dref}** and **i_{qref}.** In the shown example, the heat generation control system **300** is configured to obtain the torque request T_{ref} and the heat request H_{ref}, and to determine i) the operation state of the disconnect couplings **30a-b,** and ii) the reference currents **i_{dref}** and **i_{qref}.**

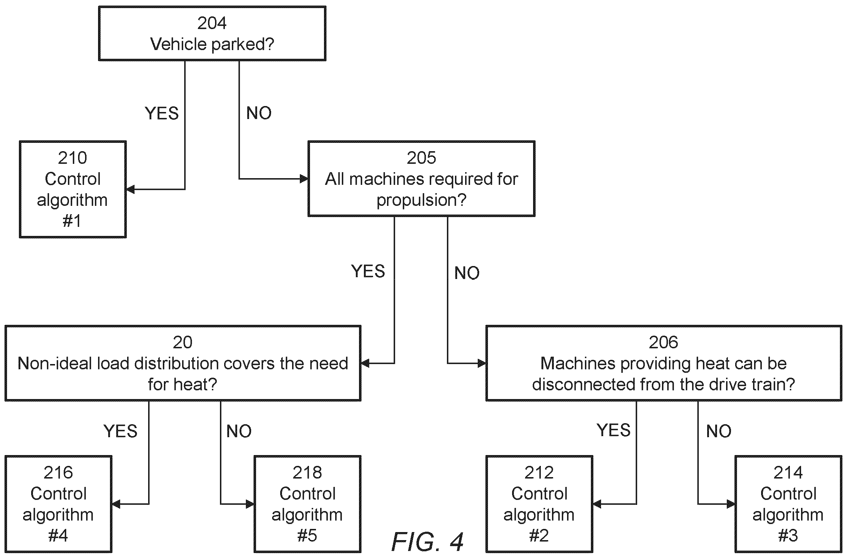

In **FIG. 4** a flow chart of a control scheme for an electric drive system according to an example is shown. The control scheme is representing an overall strategy and is typically implemented to determine the reference currents **i_{dref}** and **i_{qref}** based on the torque request T_{ref} and the heat request H_{ref} for the motor drive system **200.** Hence the control scheme may be implemented as a heat generation algorithm caused to execute by the heat generation control system **300.** It is assumed that the heat generation algorithm is performed in receipt of receiving a torque request T_{ref} and a heat request H_{ref}. The torque request T_{ref} is typically a result of a driver of the vehicle requesting propulsion of the vehicle **1,** or an automatic identification that a drive torque is required, for example for keeping the vehicle **1** at a desired speed or at a standstill. It should be noted that the torque request T_{ref} may be zero, i.e. there is no required drive torque for the vehicle **1.** The heat request H_{ref} may be a nominal value, e.g. it is required to heat a specific component by a certain amount of degrees. Optionally, or in combination, the heat request H_{ref} may be a relative value, e.g. it is determined that the energy storage system **12** is too cold to operate at optimum performance, why heating is requested.

In a first step **204,** the heat generation control system **300** determines if the vehicle **1** is parked or not. If yes, a first control algorithm **210** is performed. Each disconnect coupling **30a-b** is controlled to disconnect the associated electrical machine **10a-b** from the driveline, and the reference currents **i_{dref}** and **i_{qref}** for the motor control system **200** are determined in order to generate speed dependent losses as well as load dependent losses to generate the required excess heat but still providing no drive torque to the drive train.

For this, the speed and the stator current in the electrical machines **10a-b** may be controlled by controlling the amplitude and angle of the stator current vector, which affect both the torque and the losses in the electrical machines **10a-b.** The losses in the windings are proportional to the square of the winding current, and the losses in the iron core increase with the speed. Consequently, it is possible to increase the heat generation in the electrical machines **10a-b** by increasing both the current and the speed. Therefore, when the speed and the current amplitude of the electrical machines **10a-b** can be controlled freely it is possible to maximize the heat generation from both winding and iron losses. Both the speed and current, or even only speed, may be used to maximize the heat generation. The speed is not only used to distribute the heat equally in the electrical machine **10a-b,** but also takes a great part in the actual heat generation.

If it is determined that the vehicle **1** is not parked, a second step **205** is performed by determining if all electrical machines **10a-b** are required for providing the desired drive torque T_{ref}. A third step **206** is performed when not all electrical machines **10a-b** are required for providing the requested torque T_{ref}. In the third step **206,** it is determined if the electrical machine(s) **10a-b** not required to provide the requested torque T_{ref} can be disconnected from the drivetrain. In the use case when the vehicle **1** is moving and the propulsion can be achieved without using all the electrical machines **10a-b,** and the non-required electrical machine(s) **10a-b** can be disconnected, a second control algorithm **212** will be performed. The second algorithm **212** is configured to disconnect the one or more electrical machines **10a-b** not required for propulsion, and the remaining electrical machines **10a-b** still connected to the drivetrain will be controlled to provide the required torque T_{ref}. The disconnected electrical machine(s) **10a-b** are controlled to generate the requested heat H_{ref}. The requested heat H_{ref} may be generated in the same way as described above for the first control algorithm **210,** although only using the disconnected electrical machine(s) **10a-b.**

On the other hand, if it is determined that the vehicle **1** is moving and the propulsion can be covered without using all the electrical machines **10a-b,** but the electrical machines **10a-b** that is/are not required to propel the vehicle **1** cannot be disconnected from the drivetrain, a third control algorithm **214** is executed. This situation may occur if there is no disconnect coupling **30a-b,** such that at least one of the electrical machines **10a-b** is always connected to the gearbox **20.** In the third control algorithm **214,** currents that create a field that is aligned with the magnetizing field may be applied to the armature windings in the electrical machine(s) **10a-b** that is/are used for generating the excess heat, i.e. the heat requirement H_{ref}. The currents will thus generate excess heat in the electrical machine(s) **10a-b** without affecting the output torque of the drive system **11.**

If the second step **205** is performed by determining that all electrical machines **10a-b** are in fact required for providing the desired drive torque T_{ref}, a fourth step **207** is performed by determining if a non-ideal load distribution of the electrical machines **10a-b** will be sufficient to obtain the requested heat H_{ref}. In the use case when the vehicle **1** is moving and the propulsion must use all the electrical machines **10a-b,** and a non-ideal load distribution will cover the requested heat H_{ref}, a fourth control algorithm **216** is executed. The fourth control algorithm **216** is performed by re-distribute the load between the electrical machines **10a-b** so that sufficient heat is generated. In this case, it is possible to use the same torque-control method for the electrical machines **10a-b** that is used for normal driving.

On the other hand, in the use case when the vehicle **1** is moving and the propulsion must use all the electrical machines **10a-b,** and a non-ideal load distribution will not cover the requested heat H_{ref}, a fifth control algorithm **218** is executed. In the fifth control algorithm **218,** one or more electrical machines **10a-b** used for propulsion is controlled at non-ideal operational points. Look-up tables that give dq current references as functions of the torque and the position on the iso-torque lines may be used for this approach. The dq current references may be realized with an optional current control method, eg field-oriented control. Each requested torque can be realized with an infinite amount of different *dq* current combinations. Instead of choosing the current combination that yields the lowest current or the lowest loss for a specific torque when controlling the machine, the fifth control algorithm **218** chooses a current combination that uses more current to generate the requested heat H_{ref}. The current combinations may be chosen based on a reference of the placement on the iso torque curve. By oscillating between two sets of *dq* currents it is possible to increase the heat generation in the stator of the machine, which is beneficial if the machine is cooled by a liquid coolant in the housing. Further, the fifth control algorithm **218** may induce a pulsating field in the rotor which heats the magnets of the machine. This is especially beneficial when dealing with permanent magnet materials that easily demagnetize at cold temperatures.

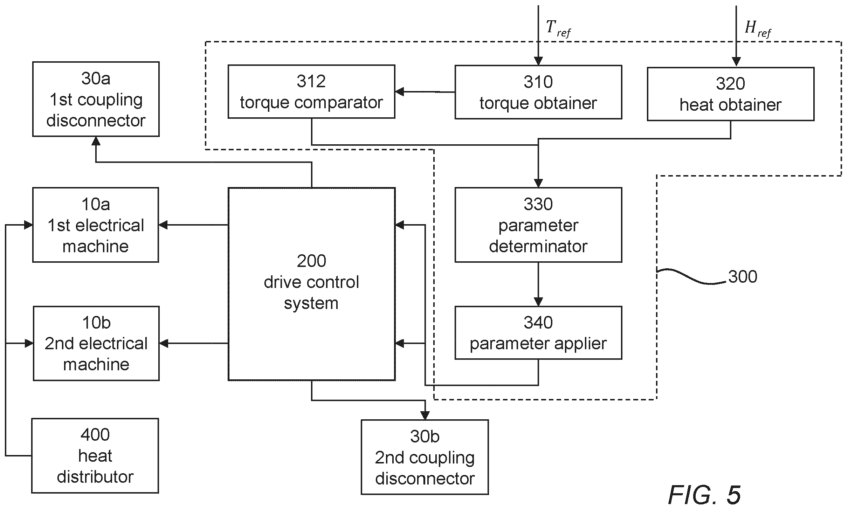

**FIG. 5** is an exemplary system diagram of a heat generation control system **300** according to an example. The heat generation control system **300** is configured to provide control parameters, in particular reference *dq* currents *i_{dref}, i_{gref}* to the motor drive system **200.** It should however be noted that in some examples, the heat generation control system **200** may be implemented as part of the motor drive system **200.**

The heat generation control system **300** comprises a torque obtainer **310.** The torque obtainer **310** is configured to obtain a torque request T_{ref} being indicative of the required output torque of the one or more electrical machines **10a-b** being part of the motor drive system **11.** The heat generation control system **300** further comprises a heat obtainer **320.** The heat obtainer **320** is configured to obtain a heat request H_{ref} being indicative of the required heat for one or more components of the vehicle **1.**

The heat generation control system **300** further comprises a torque comparator **312.** The torque comparator **312** is configured to compare the requested torque T_{ref} with the torque availability of the motor drive system **11.** The torque comparator **312** is typically configured to determine if the requested torque T_{ref} is available, and if so which electrical machines **10a-b** that are required, or available, to provide the requested torque T_{ref}.

Based on the output of the torque comparator **312,** as well as requested torque T_{ref} and the requested heat H_{ref}, control parameters are determined. For this, the heat generation control system **300** comprises a parameter determinator **330.** The parameter determinator **330** is typically configured to determine reference *dq* currents i_{dref}, i_{qref} for the drive control system **200.** The parameter determinator **330** is typically configured to determine the control parameters based on the control scheme described with reference to **FIG. 4****.** This means that the parameter determinator **330** is configured to determine the control parameters based on, for example, if the vehicle is parked, if all electrical machines **10a-b** are required for obtaining the requested torque T_{ref}, if not if the electrical machines **10a-b** intended to be used to generate heat can be disconnected from the drivetrain or not, otherwise if a non-ideal load distribution is sufficient to cover the requested heat H_{ref}.

The heat generation control system **300** further comprises a parameter applier **340.** The parameter applier **340** is configured to provide the determined parameters, typically the reference *dq* currents i_{dref}, i_{qref} to the one or more drive control systems **200.** The drive control system **200** is configured to control the operation of the disconnector couplings **30a-b** as well as the electrical machines **10a-b** in order to i) fulfill the torque requirement T_{ref}, and ii) the heat requirement H_{ref}.

Also shown in **FIG. 5** is a heat distributor **400** configured to distribute the generated heat H_{ref} to one or more components of the vehicle **1** in need for the excess heat. The heat distributor **400** may e.g. be realized as a liquid cooling system **400** as described with reference to **FIG. 2****.**

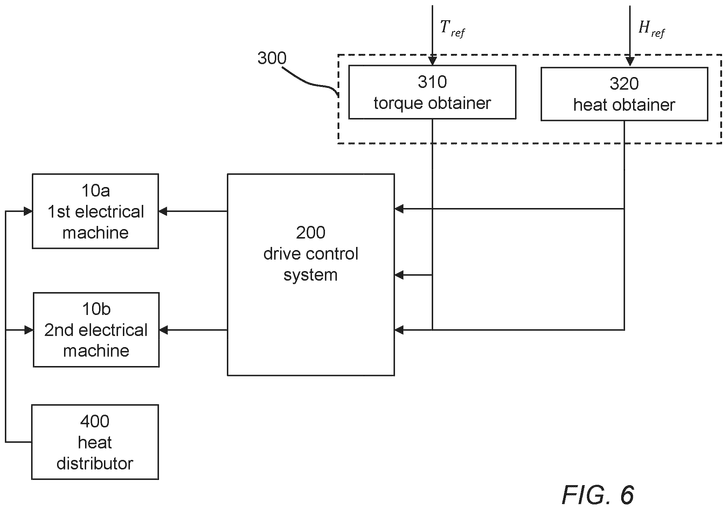

**FIG. 6** is another view of a heat generation control system **300** according to an example. The heat generation control system **300** is preferably implemented by a computer system comprising processing circuitry configured to perform the required tasks. The heat generation control system **300** comprises a torque obtainer **310** configured to obtain a required drive torque T_{ref} for a vehicle **1.** The heat generation control system **300** further comprises a heat obtainer **320** configured to obtain a heat requirement H_{ref} for a component **12, 14, 20, 40** of the vehicle **1.** The processing circuitry is further configured to cause, in response to the required drive torque T_{ref} being less than the maximum torque capability of at least one electrical machine **10a-b:** control of at least one first electrical machine **10a,** connected to a drivetrain of the vehicle **1** and forming part of a vehicle drive system **11,** to generate the required drive torque T_{ref}; and control of at least one second electrical machine **10b** forming part of the vehicle drive system **11,** to generate excess heat H_{ref}. The processing circuitry is further configured to distribute the excess heat H_{ref} to the component **12, 14, 20, 40** of the vehicle **1** such that the heat requirement H_{ref} is fulfilled.

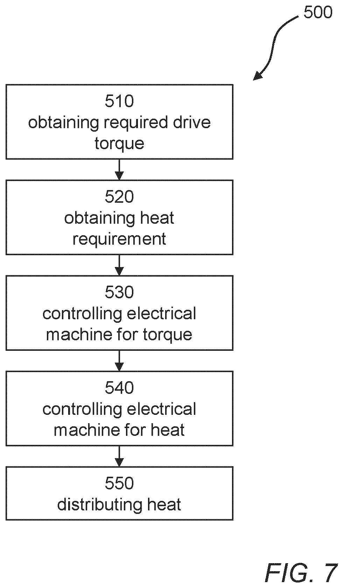

**FIG. 7** is a flow chart of an exemplary method **500** to operate an electrical drive system to generate excess heat H_{ref} according to an example. The method **500** comprises obtaining **510,** by processing circuitry of a computer system, a required drive torque T_{ref} for a vehicle. The method **500** further comprises obtaining **520,** by the processing circuitry, a heat requirement H_{ref} for a component **12, 14, 20, 40** of the vehicle **1.** The method **500** also comprises causing, by the processing circuitry in response to the required drive torque T_{ref} being less than the maximum torque capability of at least one electrical machine **10a-b:** control **530,** of at least one first electrical machine **10a,** connected to a drivetrain of the vehicle **1** and forming part of a vehicle drive system **11,** to generate the required drive torque, and control **540** of at least one second electrical machine **10b** forming part of the vehicle drive system **11,** to generate excess heat H_{ref}. The method further comprises distributing **550,** by the processing circuitry, the excess heat H_{ref} to the component **12, 14, 20, 40** of the vehicle **1** such that the heat requirement H_{ref} is fulfilled.

It should be noted that any part of a computer system **100,** as well as any processing circuitry programmed to perform the method **500,** could be implemented as embedded software and/or hardware with a computer system **100** configured to control the operation of the electrical machines **10a-b.** However, any processing circuitry programmed to perform the method **500,** could in other examples be implemented as a stand-alone application.

**FIG. 8** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: obtain a required drive torque (T_{ref}) for a vehicle (**1**); obtain a heat requirement (H_{ref}) for a component (**12, 14, 20, 40**) of the vehicle (**1**); wherein the processing circuitry is further configured to cause, in response to the required drive torque (T_{ref}) being less than the maximum torque capability of at least one electrical machine (**10a-b**): control of at least one first electrical machine (**10a-b**), connected to a drivetrain of the vehicle (**1**) and forming part of a vehicle drive system (**11**), to generate the required drive torque (T_{ref}); and control of at least one second electrical machine **(10a-b)** forming part of the vehicle drive system (**11**), to generate excess heat; wherein the processing circuitry is further configured to: distribute the excess heat to the component (**12, 14, 20, 40**) of the vehicle (**1**) such that the heat requirement (H_{ref}) is fulfilled.

Example 2: The computer system of Example 1, wherein the processing circuitry is further configured to cause, in response to the associated vehicle (**1**) being parked: control of at least one electrical machine (**10a-b**), connected to a drivetrain (**11**) of the vehicle (**1**), to generate excess heat; and control of all electrical machines (**10a-b**) of the vehicle drive system (**11**) to generate zero drive torque.

Example 3: The computer system of Example 1 or 2, wherein the processing circuitry is further configured to cause: control of at least one electrical machine (**10a-b**), disconnected from the drivetrain of the vehicle (**1**) and forming part of the vehicle drive system (**11**), to generate excess heat.

Example 4: The computer system of Example 1 or 2, wherein the processing circuitry is further configured to cause: control of at least one electrical machine (**10a-b**), connected to the drivetrain of the vehicle (**1**) and forming part of the vehicle drive system (11), to generate excess heat.

Example 5: The computer system of any of Examples 1-4, wherein the processing circuitry is further configured to cause, in response to the required drive torque (T_{ref}) being equal to the maximum torque capability of the vehicle drive system (**11**): control of at least one electrical machine (**10a-b**), connected to a drivetrain of the vehicle (**1**), at a non-ideal condition to generate excess heat while maintaining the torque output.

Example 6: The computer system of Example 3, wherein the processing circuitry is further configured to: apply a first set of control parameters (*i_{dref}, i_{qref}*) for the at least one connected electrical machine (**10a-b**), and a second set of control parameters (*i_{dref}, i_{qref}*) for the at least one disconnected electrical machine (**10a-b**).

Example 7: The computer system of Example 6, wherein the first set of control parameters (*i_{dref}, i_{qref}*) is optimized with regards to generation of drive torque, and/or wherein the second set of control parameters (*i_{dref}, i_{qref}*) is suboptimal with regards to generation of drive torque.

Example 8: The computer system of any of Examples 6-7, wherein the second set of control parameters (*i_{dref}, i_{qref}*) is optimized with regards to generation of excess heat.

Example 9: The computer system of any of Examples 6-8, wherein the processing circuitry is further configured to: determine that at least one electrical machine (**10a-b**) of the vehicle drive system (**11**) is capable of providing the required drive torque (T_{ref}); and disconnect the at least one remaining electrical machine (**10a-b**) of the vehicle drive system (11) from the drivetrain of the vehicle (**1**).

Example 10: The computer system of any of Examples 6-9, wherein the processing circuitry is further configured to: control a cooling system (**400**) of the electric drive system (**11**) to distribute the excess heat to the component (**12, 14, 20, 40**) of the vehicle (**1**).

Example 11: The computer system of Example 1, wherein the electrical machines **(10a-b)** are connected to a common gearbox (**20**), and wherein the processing circuitry is further configured to: apply a first set of control parameters (*i_{dref}, i_{qref}*) for the at least one connected electrical machine (**10a-b**), and a second set of control parameters (*i_{dref}, i_{qref}*) for the at least one disconnected electrical machine (**10a-b**); wherein the first set of control parameters (*i_{dref}, i_{qref}*) is optimized with regards to generation of drive torque, wherein the second set of control parameters (*i_{dref}, i_{qref}*) is suboptimal with regards to generation of drive torque and optimized with regards to generation of excess heat; wherein the processing circuitry is further configured to: determine that the required drive torque of the vehicle (**1**) is less than a maximum available torque of the vehicle drive system (**11**); determine that at least one electrical machine **(10a-b)** of the vehicle drive system (**11**) is capable of providing the required drive torque (T_{ref}); and disconnect the at least one remaining electrical machine (**10a-b**) of the vehicle drive system (**11**) from the drivetrain of the vehicle (**1**); and wherein the processing circuitry is further configured to: control a cooling system (**400**) of the electric drive system (**11**) to distribute the excess heat to the component (**12, 14, 20, 40**) of the vehicle (1).

Example 12: An electric drive system (**11**) of a vehicle (**1**), comprising at least two electrical machines (**10a-b**) and the computer system of any of Examples 1-11.

Example 13: The electrical drive system of Example 12, further comprising a gearbox (**20**) connected to the at least two electrical machines (**10a-b**), and wherein each electrical machine (**10a-b**) is connected to the gearbox (**20**) via a disconnect coupling (**30a-b**).

Example 14: A vehicle (**1**) comprising the electrical drive system of any of Examples 12-13.

Example 15: A computer-implemented method, comprising: obtaining, by processing circuitry of a computer system, a required drive torque for a vehicle; obtaining, by the processing circuitry, a heat requirement for a component of the vehicle; causing, by the processing circuitry in response to the required drive torque being less than the maximum torque capability of at least one electrical machine: control, of at least one first electrical machine, connected to a drivetrain of the vehicle and forming part of a vehicle drive system, to generate the required drive torque; control of at least one second electrical machine forming part of the vehicle drive system, to generate excess heat; and wherein the method further comprising: distributing, by the processing circuitry, the excess heat to the component of the vehicle such that the heat requirement is fulfilled.

Example 16: The method of Example 15, further comprising: applying a first set of control parameters for the at least one connected electrical machine, and a second set of control parameters for the at least one disconnected electrical machine, wherein the first set of control parameters is optimized with regards to generation of drive torque, and wherein the second set of control parameters is suboptimal with regards to generation of drive torque.

Example 17: The method of Example 15 or 16, further comprising: determining that the required drive torque of the vehicle is less than a maximum available torque of the vehicle drive system; determining that at least one electrical machine of the vehicle drive system is capable of providing the required drive torque; and disconnecting the at least one remaining electrical machine of the vehicle drive system from the drivetrain of the vehicle.

Example 18: The method of any of Examples 15-17, further comprising: controlling a cooling system of the electric drive system to distribute the excess heat to the component of the vehicle.

Example 19: A computer program product comprising program code for performing, when executed by the processing circuitry, the method of any of Examples 15-18.

Example 20: A non-transitory computer-readable storage medium comprising instructions, which when executed by the processing circuitry, cause the processing circuitry to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
obtain a required drive torque (T_{ref}) for a vehicle (**1**);
obtain a heat requirement (H_{ref}) for a component (**12, 14, 20, 40**) of the vehicle (**1**);
wherein the processing circuitry is further configured to cause, in response to the required drive torque (T_{ref}) being less than the maximum torque capability of a vehicle drive system (**11**):
control of at least one first electrical machine (**10a-b**), connected to a drivetrain of the vehicle (**1**) and forming part of a vehicle drive system (**11**), to generate the required drive torque (T_{ref}); and
control of at least one second electrical machine (**10a-b**) forming part of the vehicle drive system (**11**), to generate excess heat;
wherein the processing circuitry is further configured to:
distribute the excess heat to the component (**12, 14, 20, 40**) of the vehicle (**1**) such that the heat requirement (H_{ref}) is fulfilled.

2. The computer system of claim 1, wherein the processing circuitry is further configured to cause, in response to the associated vehicle (**1**) being parked and the required drive torque (T_{ref}) being zero:
control of at least one electrical machine (**10a-b**), disconnected to a drivetrain of the vehicle (**1**), to generate excess heat; and
control of all electrical machines (**10a-b**) of the vehicle drive system (**11**) to generate zero drive torque.

3. The computer system of claim 1 or 2, wherein the processing circuitry is further configured to cause:
control of at least one electrical machine (**10a-b**), disconnected from the drivetrain of the vehicle (**1**) and forming part of the vehicle drive system (**11**), to generate excess heat.

4. The computer system of claim 1 or 2, wherein the processing circuitry is further configured to cause:
control of at least one electrical machine (**10a-b**), connected to the drivetrain of the vehicle (**1**) and forming part of the vehicle drive system (**11**), to generate excess heat.

5. The computer system of any of claims 1-4, wherein the processing circuitry is further configured to cause, in response to the required drive torque (T_{ref}) being higher than the maximum torque capability of at least one electrical machine (**10a-b**):
control of at least one electrical machine (**10a-b**), connected to a drivetrain of the vehicle (**1**), at a non-ideal condition to generate excess heat while maintaining the torque output.

6. The computer system of claim 3, wherein the processing circuitry is further configured to:
apply a first set of control parameters (*i_{dref}, i_{qref}*) for the at least one connected electrical machine (**10a-b**), and a second set of control parameters (*i_{dref}, i_{qref}*) for the at least one disconnected electrical machine (**10a-b**), optionally, wherein the first set of control parameters (*i_{dref}, i_{qref}*) is optimized with regards to generation of drive torque, and/or wherein the second set of control parameters (*i_{dref}, i_{qref}*) is suboptimal with regards to generation of drive torque, optionally, wherein the second set of control parameters (*i_{dref}, i_{qref}*) is optimized with regards to generation of excess heat.

7. The computer system of claim 6, wherein the processing circuitry is further configured to:
determine that at least one electrical machine (**10a-b**) of the vehicle drive system (**11**) is capable of providing the required drive torque (T_{ref}); and
disconnect the at least one remaining electrical machine (**10a-b**) of the vehicle drive system (**11**) from the drivetrain of the vehicle (**1**).

8. The computer system of any of claims 6-7, wherein the processing circuitry is further configured to:
control a cooling system (**400**) of the electric drive system (**11**) to distribute the excess heat to the component (**12, 14, 20, 40**) of the vehicle (**1**).

9. The computer system of claim 1, wherein the electrical machines (**10a-b**) are connected to a common gearbox (**20**), and wherein the processing circuitry is further configured to:
apply a first set of control parameters (*i_{dref}, i_{qref}*) for the at least one connected electrical machine (**10a-b**), and a second set of control parameters (*i_{dref}, i_{qref}*) for the at least one disconnected electrical machine (**10a-b**);
wherein the first set of control parameters (*i_{dref}, i_{qref}*) is optimized with regards to generation of drive torque, wherein the second set of control parameters (*i_{dref}, i_{qref}*) is suboptimal with regards to generation of drive torque and optimized with regards to generation of excess heat;
wherein the processing circuitry is further configured to:
determine that the required drive torque of the vehicle (**1**) is less than a maximum available torque of the vehicle drive system (**11**);
determine that at least one electrical machine (**10a-b**) of the vehicle drive system (**11**) is capable of providing the required drive torque (T_{ref}); and
disconnect the at least one remaining electrical machine (**10a-b**) of the vehicle drive system (**11**) from the drivetrain of the vehicle (**1**); and
wherein the processing circuitry is further configured to:
control a cooling system (**400**) of the electric drive system (**11**) to distribute the excess heat to the component (**12, 14, 20, 40**) of the vehicle (**1**).

10. An electric drive system (**11**) of a vehicle (**1**), comprising at least two electrical machines (**10a-b**) and the computer system of any of claims 1-9.

11. The electrical drive system of claim 10, further comprising a gearbox (**20**) connected to the at least two electrical machines (**10a-b**), and optionally wherein at least one electrical machine (**10a-b**) is connected to the gearbox (**20**) via a disconnect coupling (**30a-b**).

12. A vehicle (**1**) comprising the electrical drive system of any of claims 10-11.

13. A computer-implemented method, comprising:
obtaining, by processing circuitry of a computer system, a required drive torque for a vehicle;
obtaining, by the processing circuitry, a heat requirement for a component of the vehicle;
causing, by the processing circuitry in response to the required drive torque being less than the maximum torque capability of a vehicle drive system:
control, of at least one first electrical machine, connected to a drivetrain of the vehicle and forming part of a vehicle drive system, to generate the required drive torque;
control of at least one second electrical machine forming part of the vehicle drive system, to generate excess heat; and wherein the method further comprising:
distributing, by the processing circuitry, the excess heat to the component of the vehicle such that the heat requirement is fulfilled.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
